# EUROPEAN PATENT APPLICATION

(11) **EP 4 675 801 A1**
(43) Date of publication of application: **07.01.2026**
(21) Application number: 24887493.5
(22) Date of filing: 30.07.2024
(51) Int. Cl.: H01M 50/262, H01M 50/244, H01M 50/233, H01M 50/242

(54) **BATTERY AND ELECTRICAL DEVICE**

(30) Priority: 08.11.2023 CN 202323013324 U
(71) Applicant: Contemporary Amperex Technology Co., Ltd., Ningde, Fujian 352100 (CN)
(72) Inventor: FANG, Zhengyu, Ningde, Fujian 352100 (CN); WANG, Baojie, Ningde, Fujian 352100 (CN); QIN, Feng, Ningde, Fujian 352100 (CN); HOU, Yujia, Ningde, Fujian 352100 (CN); LIAO, Boxiang, Ningde, Fujian 352100 (CN); ZHANG, Haidong, Ningde, Fujian 352100 (CN)
(74) Representative: Lorenz Seidler Gossel Part. mbB
(86) International application number: PCT/CN2024/108581
(87) International publication number: WO 2025/097871

(57) **Abstract**

A battery (100) and an electric apparatus are provided. The electric apparatus includes the battery (100). The battery (100) includes a battery unit (10), a box (20), and a reinforcing member (30). The box (20) includes a box body (21) and a first box wall (221) covering an end of the box body (21), and the battery unit (10) is accommodated in a space enclosed by the box body (21) and the first box wall (221). At least part of the reinforcing member (30) is disposed on the first box wall (221), and is fixedly connected to the box body (21). By disposing the at least part of the reinforcing member (30) on the first box wall (221) of the box (20), the structural strength of the first box wall (221) can be improved through the provision of the reinforcing member (30). Furthermore, by fixedly connecting the reinforcing member (30) to the box body (21), the first box wall (221) can be fixed relative to the box body (21) under joint constraint by the reinforcing member (30) and the box body (21). In this way, shaking of the first box wall (221) can be mitigated, thereby reducing abnormal noise in the battery (100).

## Description

### CROSS-REFERENCE

This application claims priority to the Chinese Patent Application No. 202323013324.2, filed with the China National Intellectual Property Administration on November 8, 2023 and entitled "BATTERY AND ELECTRIC APPARATUS", which is incorporated herein by reference in its entirety.

### TECHNICAL FIELD

This application relates to the field of battery technology, and in particular, to a battery and an electric apparatus.

### BACKGROUND

**In** the related art, a battery may typically include a box and a battery unit accommodated in the box.

In some cases, a box wall of the box inevitably shakes under dynamic working conditions, thereby generating abnormal noise.

### SUMMARY

In view of the above problem, an object of embodiments of this application is to provide a battery and an electric apparatus, so as to reduce abnormal noise generated due to shaking of a box wall of a box.

The technical solutions adopted in the embodiments of this application are as follows.

In a first aspect, an embodiment of this application provides a battery, including:
a battery unit;
a box, including a box body and a first box wall covering an end of the box body, where the battery unit is accommodated in a space enclosed by the box body and the first box wall; and
a reinforcing member, at least partially disposed on the first box wall and fixedly connected to the box body.

In the battery provided in this embodiment of this application, by disposing at least part of the reinforcing member on the first box wall of the box, structural strength of the first box wall can be improved through the provision of the reinforcing member. Furthermore, the reinforcing member is fixedly connected to the box body, so that the first box wall can be fixed relative to the box body under joint constraint by the reinforcing member and the box body. In this way, shaking of the first box wall can be mitigated, thereby reducing abnormal noise in the battery.

In some embodiments, the reinforcing member is provided in plurality, at least two reinforcing members are disposed on the first box wall at intervals, and/or at least two reinforcing members are disposed on the first box wall in a staggered manner.

A plurality of reinforcing members are disposed, and the plurality of reinforcing members can be flexibly distributed on the first box wall in various states. This can improve the structural strength of the first box wall, thereby mitigating the shaking of the first box wall and reducing abnormal noise in the battery.

In some embodiments, the reinforcing member is disposed on a side of the first box wall away from the battery unit.

In this way, disposing the reinforcing member on the first box wall is convenient, and the reinforcing member does not occupy the internal space of the box, thereby helping to increase a proportion of the internal space of the box for accommodating the battery unit. Further, on the basis of selecting a material with relatively high structural strength such as metal for the reinforcing member, insulation protection between a high-voltage portion of the battery cell and the reinforcing member can be achieved through the first box wall, reducing the risk of high-voltage arcing in abnormal situations.

In some embodiments, the first box wall is disposed at an end of the box body along a first direction; the box body is provided with a first cross beam and a second cross beam spaced apart along a second direction; at least part of the battery unit is limited between the first cross beam and the second cross beam along the second direction; at least one of the first cross beam and the second cross beam is fixedly connected to the reinforcing member; and the first direction intersects the second direction.

At least one of the first cross beam and the second cross beam is fixedly connected to the reinforcing member, and the reinforcing member is disposed on the first box wall. In this way, the reinforcing member is fixedly connected to the box body, enhancing the constraint of the reinforcing member on the first box wall, and effectively mitigating shaking of the first box wall. Further, the reinforcing member can constrain at least one of the first cross beam and the second cross beam, thereby enabling the first cross beam and the second cross beam to better limit and constrain the battery unit in the second direction, so as to better resist expansion of the battery cell of the battery unit in the second direction.

In some embodiments, at least some of the reinforcing members have two opposite ends along the second direction fixedly connected to the first cross beam and the second cross beam, respectively.

In this case, among at least some of the reinforcing members, the reinforcing member can be connected to both the first cross beam and the second cross beam, to constrain the relative positions of the first cross beam and the second cross beam along the second direction. In this way, the constraint and expansion resistance of the first cross beam and the second cross beam to the battery unit in the second direction can be improved.

In some embodiments, the reinforcing member is provided in plurality; at least two reinforcing members are disposed at intervals on the first box wall along a third direction; and the third direction intersects both the first direction and the second direction.

At least two reinforcing members are spaced apart along the third direction. In this case, at least two reinforcing members may be distributed at a plurality of positions of the first box wall, thereby improving the structural strength of a plurality of portions of the first box wall, so that shaking of the first box wall can be further mitigated, reducing abnormal noise caused by shaking of the first box wall. Furthermore, it is convenient to respectively connect the first cross beam and the second cross beam to two opposite ends along the second direction of the plurality of reinforcing members, thereby further improving the constraint and expansion resistance of the first cross beam and the second cross beam to the battery unit.

In some embodiments, the box body is further provided with a first longitudinal beam and a second longitudinal beam spaced apart along the third direction; at least part of the battery unit is limited between the first longitudinal beam and the second longitudinal beam along the third direction; at least one of the first longitudinal beam and the second longitudinal beam is fixedly connected to the reinforcing member; and the third direction intersects both the first direction and the second direction.

The reinforcing member is fixedly connected to the box body, enhancing the constraint of the reinforcing member on the first box wall, and effectively mitigating shaking of the first box wall. Further, the reinforcing member can constrain at least one of the first longitudinal beam and the second longitudinal beam, thereby enabling the first longitudinal beam and the second longitudinal beam to better limit and constrain the battery unit in the third direction, so as to better resist expansion of the battery cell of the battery unit in the third direction.

In some embodiments, at least some of the reinforcing members have two opposite ends along the third direction fixedly connected to the first longitudinal beam and the second longitudinal beam, respectively.

In this way, among at least some of the reinforcing members, the reinforcing member may be connected to both the first longitudinal beam and the second longitudinal beam, so as to constrain the relative positions of the first longitudinal beam and the second longitudinal beam along the third direction. In this way, the constraint and expansion resistance of the first longitudinal beam and the second longitudinal beam to the battery unit in the third direction can be improved.

In some embodiments, the box further includes a first fastening structure, the first fastening structure includes a fastener, and the fastener locks the reinforcing member, the first box wall, and the box body.

In this way, positional fixation of the reinforcing member on the first box wall can be improved, and therefore the reinforcing member can better improve the structural strength of the first box wall, so as to mitigate shaking of the first box wall. Further, the reinforcing member is fixed relative to the box body, so that the reinforcing member can constrain the first box wall, so as to mitigate shaking of the first box wall. In addition, when the reinforcing member is locked to at least one of the first cross beam, the second cross beam, the first longitudinal beam, and the second longitudinal beam of the box body through the fastener, the expansion resistance of the box body to the battery unit can be improved.

In some embodiments, the box body is provided with a fixing member, and the fastener locks the reinforcing member, the first box wall, and the fixing member.

In the above technical solution, the fastener locks the reinforcing member, the first box wall, and the fixing member, so as to achieve fixation of the reinforcing member, the first box wall, and the box body. This facilitates fixing operations between the fastener and the box body.

In some embodiments, the first box wall is provided with an opening for passage of the fastener; the first fastening structure further includes a sealing member; and the sealing member is sleeved on a periphery of the fastener to seal the opening.

In the above technical solution, the sealing member can seal the opening of the first box wall, so as to seal the internal space of the box.

In some embodiments, the first box wall is provided with a groove, and at least part of the reinforcing member is limited in the groove.

In the above technical solution, at least part of the reinforcing member may be limited in the groove of the first box wall. In this way, the reinforcing member can improve the structural strength of the first box wall, and the reinforcing member can improve the expansion resistance of the first cross beam and the second cross beam to the battery unit.

In some embodiments, the battery further includes a second fastening structure, where the second fastening structure fastens the reinforcing member to the first box wall;
and/or the battery further includes a third fastening structure, where the third fastening structure fastens the battery unit to the first box wall.

The first box wall and the reinforcing member are fastened by the second fastening structure, so that the reinforcing member can be firmly fastened to the first box wall, thereby better improving the structural strength of the first box wall.

The first box wall and the battery unit are fastened by the third fastening structure, so that the first box wall can be fixed relative to the battery unit. The fixing relationship between the battery unit and the first box wall can constrain the first box wall, thereby mitigating shaking of the first box wall.

In some embodiments, the second fastening structure includes a first adhesive layer, and the first adhesive layer is disposed between the reinforcing member and the first box wall and adheres to the reinforcing member and the first box wall;
and/or the third fastening structure includes a second adhesive layer, and the second adhesive layer is disposed between the first box wall and the battery unit and adheres to the first box wall and the reinforcing member.

The second fastening structure is set to include the first adhesive layer. In this case, the operation of using the second fastening structure to fasten the first box wall to the reinforcing member is easy.

The third fastening structure is set to include the second adhesive layer. In this case, the operation of using the third fastening structure to fasten the battery unit to the first box wall is easy.

In some embodiments, the reinforcing member is a steel strip, an iron strip, an aluminum strip, an aluminum alloy strip, or a polymer material strip.

In the above technical solution, the reinforcing member has relatively high structural strength, thereby effectively improving the structural strength of the first box wall and constraining the first box wall, and mitigating shaking of the first box wall.

In a second aspect, an embodiment of this application provides an electric apparatus, including the battery.

For the electric apparatus provided in this embodiment of this application, abnormal noise in the battery can be reduced by adopting the battery described above.

The above description is only an overview of the technical solutions of this application. For a clearer understanding of the technical means of this application and implementation in accordance with the content of the specification, and in order to make the above and other objects, features, and advantages of this application more obvious and understandable, specific embodiments of this application are specifically cited below.

### BRIEF DESCRIPTION OF DRAWINGS

In order to more clearly illustrate the technical solutions in the embodiments of this application, the accompanying drawings for the embodiments or example technical descriptions are briefly introduced below. It is clear that the accompanying drawings in the following description are only some embodiments of this application. For those of ordinary skill in the art, other drawings can also be obtained based on these drawings without creative efforts.
FIG. 1 is a schematic diagram of a vehicle provided in some embodiments of this application;
FIG. 2 is a schematic diagram of a battery provided in some embodiments of this application;
FIG. 3 is a schematic exploded view of the battery shown in FIG. 2;
FIG. 4 is a partial cross-sectional view along A-A in FIG. 2;
FIG. 5 is a partial three-dimensional structural diagram of the battery shown in FIG. 2;
FIG. 6 is an enlarged view at B in FIG. 3; and
FIG. 7 is an enlarged view at C in FIG. 5.

In the accompanying drawings, the reference signs are as follows:
1000. vehicle; 100. battery; 200. controller; 300. motor; 10. battery unit; 11. battery cell; 20. box; 201. accommodation space; 21. box body; 211. first cross beam; 212. second cross beam; 213. first longitudinal beam; 214. second longitudinal beam; 22. cover; 2201. groove; 2202. opening; 221. first box wall; 30. reinforcing member; 40. fixing member; 50. second fastening structure; 60. first fastening structure; 61. fastener; 62. sealing member; Z. first direction; X. second direction; and Y. third direction.

### DESCRIPTION OF EMBODIMENTS

The embodiments of this application are described in detail below. Examples of the embodiments are shown in the drawings, where the same or similar reference signs throughout represent the same or similar elements or elements having the same or similar functions. The embodiments described below with reference to the drawings are illustrative and are intended to explain this application, but should not be construed as limitations on this application.

In the description of this application, it should be understood that the orientations or positional relationships indicated by terms such as "length", "width", "upper", "lower", "front", "rear", "left", "right", "vertical", "horizontal", "top", "bottom", "inner", and "outer" are based on the orientations or positional relationships shown in the drawings, which are only for the convenience of describing this application and simplifying the description, rather than indicating or implying that the referred apparatus or element must have a specific orientation or be constructed and operated in a specific orientation, and therefore should not be construed as limiting this application.

In addition, the terms "first" and "second" are used for descriptive purposes only and should not be construed as indicating or implying relative importance or implicitly indicating the number of the indicated technical features. Thus, a feature defined with "first" or "second" may explicitly or implicitly include one or more of the features.

In the description of this application, "a plurality of" means two or more, unless otherwise explicitly and specifically defined, and "two or more" includes two. Accordingly, "a plurality of groups" means two or more groups, including two groups.

In the description of this application, unless otherwise explicitly specified and defined, terms such as "mounting", "joining", "connection", "fixation" should be understood in a broad sense, for example, it may be a fixed connection, a detachable connection, or integral formation; it may be a mechanical connection or an electrical connection; it may be a direct connection or an indirect connection through an intermediate medium, or it may be internal communication of two elements or interaction between two elements. For persons of ordinary skill in the art, the specific meanings of the above terms in this application can be understood based on specific situations.

In the description of this application, the term "and/or" is only an association relationship describing associated objects, indicating that there may be three relationships, for example, A and/or B can indicate: A exists alone, A and B exist, and B exists alone. In addition, in this application, the character "/" generally indicates that the associated objects are in an "or" relationship.

Although this application is described with reference to preferred embodiments, various improvements can be made thereto and components therein can be replaced with equivalents without departing from the scope of this application. In particular, as long as there is no structural conflict, the various technical features mentioned in the embodiments can be combined in any way. This application is not limited to the specific embodiments disclosed herein, but includes all technical solutions falling within the scope of the claims.

In the related art, a battery can generally include a box and a battery unit, the battery unit may include at least one battery cell, the box may include a box body and a cover covering the box body, and the battery unit is accommodated in a space enclosed by the box body and the cover.

In some cases, a box wall of the box inevitably shakes under dynamic working conditions, thereby generating abnormal noise.

The box wall generates abnormal noise during the shaking process.

Further, the box wall may also collide with structures inside and outside the battery during the shaking process, thereby generating abnormal noise. Specifically, under dynamic working conditions, the box wall deforms toward the battery unit inside the battery, and then collides with and slaps the battery unit inside the battery. The box wall deforms away from the battery unit, and then collides with and slaps the structure outside the battery. That is, under dynamic working conditions, the box wall deforms toward the battery unit or deforms away from the battery unit, and shakes, thereby colliding with and slapping structures inside and outside the battery, and further generating abnormal noise.

The box wall of the box that shakes may be a solid wall of the cover or a solid wall of the box body.

For example, when the box wall of the box that shakes is a solid wall of the cover, four edges of one end of the cover facing the box body are usually connected to four edges of one end of the box body facing the cover. In this way, only the portions on the four edges of the cover are constrained by the box body, while other portions (such as the middle portion of the cover) are not constrained. Usually, the cover is relatively thin, and the structural strength is relatively low. In this case, the middle portion of the cover is prone to deform toward the battery unit or deform away from the battery unit under dynamic working conditions, leading to shaking, generating abnormal noise.

Correspondingly, when the box wall of the box that shakes is a solid wall of the box body, the solid wall of the box body is relatively thin and has relatively low structural strength, and therefore the solid wall of the box deforms and shakes under dynamic working conditions, generating abnormal noise.

Based on the above considerations, embodiments of this application provide a battery and an electric apparatus. At least part of a reinforcing member is disposed on a first box wall on a box, and the reinforcing member can enhance structural strength of the first box wall. In this way, shaking of the first box wall can be mitigated, thereby reducing abnormal noise in the battery.

The battery in the embodiments of this application may be a single physical module including one or more battery cells to provide a high voltage and capacity.

In some embodiments, the battery in the embodiments of this application may be used in an electric apparatus using a battery as a power source.

The electric apparatus in the embodiments of this application may be, but is not limited to, a mobile phone, a tablet, a laptop computer, an electric toy, an electric tool, an electric bicycle, a vehicle, a ship, a spacecraft, and the like. The electric toy may include a fixed or mobile electric toy, for example, a game console, an electric car toy, an electric ship toy, an electric airplane toy, and the like. The spacecraft may include an airplane, a rocket, a space shuttle, a spaceship, and the like. According to the power source, the vehicle may be a fuel vehicle, a gas vehicle, or a new energy vehicle, and the new energy vehicle may be a pure electric vehicle, a hybrid vehicle, an extended-range vehicle, or the like. According to the driving mode, the vehicle may be a front-drive vehicle, a rear-drive vehicle, or a four-wheel-drive vehicle.

In other embodiments, the battery in the embodiments of this application may also be used in an energy storage apparatus. The energy storage apparatus may be an energy storage container, an energy storage cabinet, or the like.

For ease of description, the embodiments of this application are described by using an example in which the electric apparatus is a vehicle for illustration.

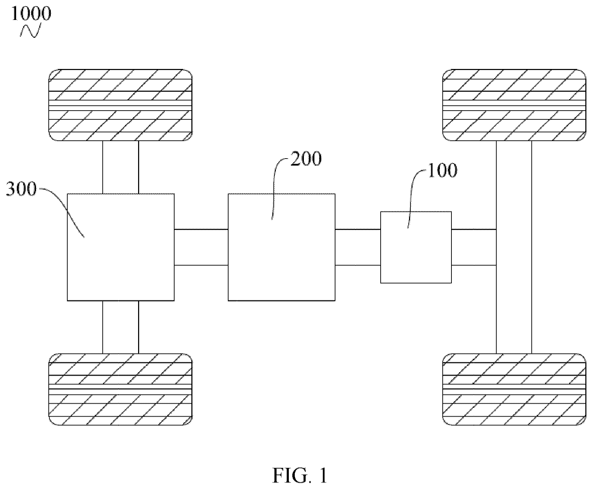

In some embodiments, refer to FIG. 1. FIG. 1 is a schematic diagram of a vehicle 1000 provided in some embodiments of this application. The above battery 100 is disposed inside the vehicle 1000, and the battery 100 may be disposed at the bottom, head, or tail of the vehicle 1000. The battery 100 may be used for power source of the vehicle 1000, for example, the battery 100 can serve as an operating power source of the vehicle 1000. The vehicle 1000 may further include a controller 200 and a motor 300, and the controller 200 is used to control the battery 100 to supply power to the motor 300, for example, to satisfy the operating power demand during starting, navigation, and driving of the vehicle 1000.

In some embodiments, the battery 100 can serve as an operating power source of the vehicle 1000 and a driving power source of the vehicle 1000, completely or partially replacing fuel or natural gas to provide driving power for the vehicle 1000.

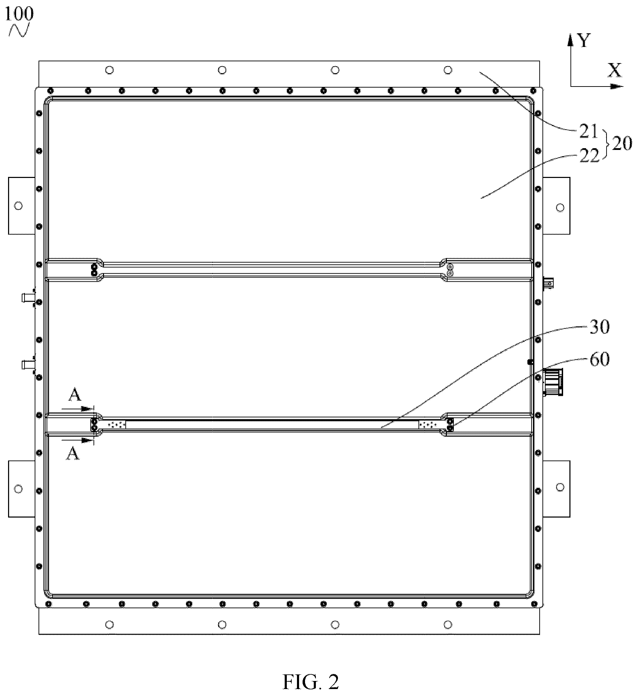

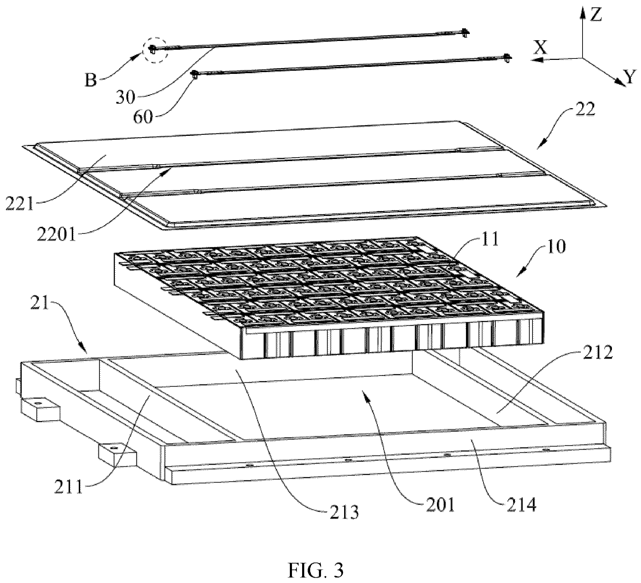

In some embodiments, refer to FIG. 2 and FIG. 3. FIG. 2 is a schematic diagram of a battery 100 provided in some embodiments of this application, specifically a schematic diagram of the battery provided in some embodiments of this application from a perspective in a first direction below, and FIG. 3 is an exploded diagram of the battery 100 provided in some embodiments of this application. The battery 100 may include a box 20 and a battery unit 10. The box 20 is a structure with an internal space, and the battery unit 10 is accommodated in the internal space of the box 20.

The box 20 may include a box body 21 and a cover 22. The box body 21 and the cover 22 fit together, and jointly define the internal space of the above box 20. In some possible designs, as shown in FIG. 3, the box body 21 may be a hollow structure with an opening at one end, the cover 22 is a plate-like structure, and the cover 22 covers the opening side of the box body 21, so that the box body 21 and the cover 22 jointly define the internal space of the box 20. Alternatively, in other possible designs, both the box body 21 and the cover 22 may be a hollow structure with an opening at one end, and the opening side of the box body 21 covers the opening side of the cover 22, so that the box body 21 and the cover 22 jointly define the internal space of the box 20. Alternatively, in still other possible designs, the box body 21 may be a hollow structure with openings at two opposite ends, there are two covers 22, the cover 22 is a plate-like structure or a hollow structure with an opening at one end, and the two covers 22 respectively cover the opening sides at two opposite ends of the box body 21, so as to jointly enclose the internal space of the box 20 with the box body 21.

The box 20 formed by the box body 21 and the cover 22 may be in various shapes, such as a cylinder, a cuboid, or the like. A material of the box 20 may be varied, such as copper, iron, aluminum, stainless steel, aluminum alloy, plastic, or the like.

In some embodiments, the box 20 of the battery 100 may be a part of the chassis structure of the vehicle 1000. For example, part of the box 20 may be at least a part of the chassis of the vehicle 1000, or part of the box 20 may be at least part of the crossmember and longitudinal beam of the vehicle 1000.

A battery unit 10 may include a battery cell 11, and one or more battery cells 11 may be provided in the battery unit 10. When there are a plurality of battery cells, the plurality of battery cells are connected in series, parallel, or series-parallel through a busbar component, where the series-parallel connection means that the plurality of battery cells are connected in series and parallel.

In some embodiments, the plurality of battery cells 11 may be connected in series, parallel, or series-parallel to form an entirety, so as to constitute the battery unit 10, and then the battery unit 10 formed by the plurality of battery cells 11 is directly accommodated in the internal space of the box 20, as shown in FIG. 3. Alternatively, in other embodiments, a plurality of battery cells 11 may be first connected in series, parallel, or series-parallel, then arranged and fastened to form a battery module, that is, to form the above battery unit 10, and accommodated in the internal space of the box 20. Alternatively, in yet other embodiments, a plurality of battery cells 11 may be first connected in series, parallel, or series-parallel and then arranged and fastened to form a plurality of battery modules, and the plurality of battery modules are then connected in series, parallel, or series-parallel to form an entirety, that is, to form the battery unit 10, and accommodated in the internal space of the box 20.

As an example, the plurality of battery cells 11 may be fastened by cable ties or the like to form a battery module. As another example, the plurality of battery cells 11 may alternatively be fixed by end plates, side plates, or the like to form a battery module.

It can be understood that the battery unit 10 may be one battery cell 11 or an entirety formed by a plurality of battery cells 11 connected in series, parallel, or series-parallel, or may be a battery module formed by arranging and fastening a plurality of battery cells 11 connected in series, parallel, or series-parallel; or even a plurality of battery cells 11 are first connected in series, parallel, or series-parallel, and arranged and fastened to form a plurality of battery modules, and the plurality of battery modules are then connected in series, parallel, or series-parallel to form an entirety. That is, the battery unit 10 is the entirety formed by all battery cells 11 in the battery 100.

The battery cell 11 refers to the smallest unit for storing and outputting electrical energy. The battery cell 11 may be a secondary battery or a primary battery. The battery cell 11 may be, but is not limited to, a metal battery, a lithium-sulfur battery, a sodium-ion battery, or a magnesium-ion battery. The battery cell 11 may be in a cylindrical shape, a flat shape, a cuboid shape, or the like.

Refer to FIG. 2, FIG. 3, and other figures. The battery 100 provided in the embodiments of this application includes a battery unit 10, a box 20, and a reinforcing member 30. The battery unit 10 is accommodated in the box 20, and the box 20 includes a first box wall 221. At least part of the reinforcing member 30 is disposed on the first box wall 221.

The first box wall 221 refers to any outer wall of the box 20, which is a solid wall. The first box wall 221 is disposed opposite the battery unit 10.

It should be noted herein first that, as shown in FIG. 3, the battery unit 10 is accommodated in the internal space of the box 20. Specifically, the box 20 includes a box body 21 and a cover 22, the cover 22 covers the box body 21, and the battery unit 10 is accommodated in the space enclosed by the box body 21 and the cover 22. Although the battery 100 in the embodiments of this application is developed based on the abnormal noise problem during shaking of the cover 22 under dynamic working conditions, application scenarios are not limited to thereto. It can be understood that the first box wall 221 may be a solid wall of the cover 22, or a solid wall of the box body 21, or even at least part of the solid wall of the cover 22 and at least part of the solid wall of the box body 21 may both be the first box wall 221. As an example, as shown in FIG. 2 and FIG. 3, the solid wall of the cover 22 is the first box wall 221. As another example, a bottom wall of the box body 21 opposite to the cover 22 is the first box wall 221. As still another example, a side wall of the box body 21 is the first box wall 221. The side wall of the box body 21 and the bottom wall of the box body 21 are both outer walls of the box body 21 and are both solid walls.

It should be further noted herein that one wall or two opposite walls of the box 20 along a first direction Z below may be the first box wall 221, or one wall or two opposite walls of the box 20 along a second direction X below may be the first box wall 221, or one or two opposite walls of the box 20 along a third direction Y below may be the first box wall 221. It can be understood that when the box 20 is a hexahedron, the wall on at least one face of the box 20 may be the first box wall 221. As an example, as shown in FIG. 2 and FIG. 3, the first box wall 221 is one wall of the box 20 along the first direction Z, and the first direction Z is parallel to a thickness direction of the battery 100, that is, the first box wall 221 is one wall of the box 20 along the thickness direction.

The reinforcing member 30 refers to a component that can be used to reinforce the structural strength of the first box wall 221. Specifically, at least part of the reinforcing member 30 is disposed on the first box wall 221, to improve the structural strength of the first box wall 221.

In the battery 100 provided in the embodiments of this application, by disposing at least part of the reinforcing member 30 on the first box wall 221 on the box 20, the structural strength of the first box wall 221 can be improved through the provision of the reinforcing member 30. In this way, shaking of the first box wall 221 can be mitigated, thereby reducing abnormal noise in the battery 100.

It should be additionally noted herein that at least part of the reinforcing member 30 can be disposed at the middle portion of the first box wall 221, to improve the structural strength of the middle portion of the first box wall 221 as much as possible, thereby greatly improving the structural strength of the first box wall 221 and reducing abnormal noise caused by shaking of the first box wall 221.

In some embodiments, refer to FIG. 2, FIG. 3, and other figures. The reinforcing members 30 are provided in plurality. In some possible designs, as shown in FIG. 2 and FIG. 3, at least two reinforcing members 30 are disposed on the first box wall 221 at intervals. Alternatively, in other possible designs, at least two reinforcing members 30 are disposed on the first box wall 221 in a staggered manner. Alternatively, in still other possible designs, at least two reinforcing members 30 are disposed on the first box wall 221 at intervals, and at least two reinforcing members 30 are disposed on the first box wall 221 in a staggered manner.

Among the at least two reinforcing members 30 spaced apart on the first box wall 221, as shown in FIG. 2, at least two reinforcing members 30 that are spaced and parallel may be included, or at least two reinforcing members 30 that are spaced and non-parallel may be included. That is, at least two reinforcing members 30 are spaced and parallel; or at least two reinforcing members 30 are spaced and non-parallel; or at least two reinforcing members 30 are spaced and parallel, and at least two reinforcing members 30 are spaced and non-parallel. At least one reinforcing member 30 may be spaced and parallel to some of the reinforcing members 30, and spaced and non-parallel to other reinforcing members 30.

At least two reinforcing members 30 being disposed on the first box wall 221 in a staggered manner means that the at least two reinforcing members 30 are not disposed at intervals, their extension directions intersect, and the at least two reinforcing members 30 are staggered.

When at least two reinforcing members 30 are disposed on the first box wall 221 at intervals, and at least two reinforcing members 30 are disposed on the first box wall 221 in a staggered manner, at least one reinforcing member 30 can be staggered with some of the reinforcing members 30, and spaced from other reinforcing members 30.

A plurality of reinforcing members 30 are disposed, and the plurality of reinforcing members 30 can be flexibly distributed on the first box wall 221 in various states. This can improve the structural strength of the first box wall 221, thereby mitigating the shaking of the first box wall 221 and reducing abnormal noise in the battery 100.

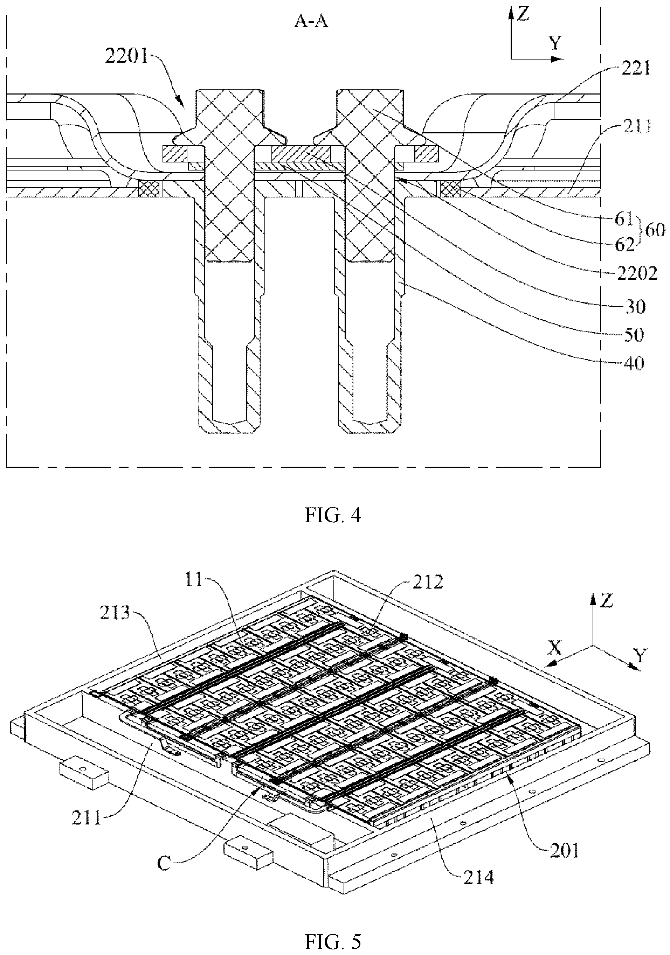

In some embodiments, refer to FIG. 2 to FIG. 4 and other figures. FIG. 4 is a partial cross-sectional view along A-A in FIG. 2. The reinforcing member 30 is disposed on a side of the first box wall 221 away from the battery unit 10.

As shown in FIG. 2 to FIG. 4, the first box wall 221 is disposed at an end of the box 20 along the first direction Z, and the reinforcing member 30 is disposed on a side of the first box wall 221 away from the battery unit 10 along the first direction Z.

It should be understood that the reinforcing member 30 is disposed on the outer side of the first box wall 221.

In this way, disposing the reinforcing member 30 on the first box wall 221 is convenient, and the reinforcing member 30 does not occupy the internal space of the box 20, thereby helping to increase a proportion of the internal space of the box 20 for accommodating the battery unit 10. Further, on the basis of selecting a material with relatively high structural strength such as metal for the reinforcing member 30, insulation protection between a high-voltage portion of the battery cell 11 and the reinforcing member 30 can be achieved through the first box wall 221, reducing the risk of high-voltage arcing in abnormal situations.

In some embodiments, refer to FIG. 2 to FIG. 4 and other figures. The box 20 includes a box body 21 and the above first box wall 221, and the first box wall 221 covers an end of the box body 21. The battery unit 10 is accommodated in a space enclosed by the box body 21 and the first box wall 221. The reinforcing member 30 is fixedly connected to the box body 21.

The first box wall 221 and the box body 21 may be integrally connected by integral die-casting, stamping, and the like, or separately connected by welding, bolt fixing, rivet fixing, and the like.

The first box wall 221 and the box body 21 enclose the internal space of the box 20. As an example, as shown in FIG. 2 to FIG. 4, the first box wall 221 is provided on the cover 22 as a solid wall of the cover 22. The cover 22 covers an end of the box body 21, so as to enclose the internal space of the box 20 with the box body 21.

In the above technical solution, the reinforcing member 30 is not only disposed on the first box wall 221, but also fixedly connected to the box body 21. In this way, the first box wall 221 may be fixed relative to the box body 21 under joint constraint by the reinforcing member 30 and the box body 21, thereby further mitigating shaking of the first box wall 221, and reducing abnormal noise caused by shaking of the first box wall 221.

In some embodiments, refer to FIG. 2 to FIG. 5 and other figures. FIG. 5 is a partial three-dimensional structural diagram of the battery 100 provided in some embodiments of this application. The first box wall 221 is disposed at an end of the box body 21 along the first direction Z. The box body 21 is provided with a first cross beam 211 and a second cross beam 212, and the first cross beam 211 and the second cross beam 212 are spaced apart along the second direction X. At least part of the battery unit 10 is limited between the first cross beam 211 and the second cross beam 212 along the second direction X. At least one of the first cross beam 211 and the second cross beam 212 is fixedly connected to the reinforcing member 30. The first direction Z intersects the second direction X.

Both the first cross beam 211 and the second cross beam 212 refer to components used to limit the battery unit 10 along the second direction X. The first cross beam 211 may be an outer wall of the box body 21, or a wall located in the internal space of the box 20. The second cross beam 212 may be an outer wall of the box body 21, or a wall located in the internal space of the box 20.

The first cross beam 211 and the second cross beam 212 are spaced apart along the second direction X, so that the first cross beam 211 and the second cross beam 212 define an accommodation space 201 along the second direction X at intervals, and the accommodation space 201 is at least part of the internal space of the box 20.

As an example, as shown in FIG. 3 and FIG. 5, the accommodation space 201 is one part of the internal space of the box 20.

As an example, as shown in FIG. 5 and FIG. 5, both the first cross beam 211 and the second cross beam 212 are located in the internal space of the box 20, and are not the outer walls of the box body 21, so that the accommodation space 201 defined by the first cross beam 211 and the second cross beam 212 is one part of the internal space of the box 20.

At least part of the battery unit 10 is limited between the first cross beam 211 and the second cross beam 212 along the second direction X, which means that at least part of the battery unit 10 is located between the first cross beam 211 and the second cross beam 212 (that is, located in the accommodation space 201), and is limited along the second direction X by the first cross beam 211 and the second cross beam 212. One side of the battery unit 10 along the second direction X can directly abut against the first cross beam 211, and a side of the battery unit 10 along the second direction X away from the first cross beam 211 may also directly abut against the second cross beam 212. An intermediate component may abut against a side of the battery unit 10 away from the second cross beam 212 along the second direction X and the first cross beam 211, and another intermediate component may abut against a side of the battery unit 10 away from the first cross beam 211 along the second direction X and the second cross beam 212. In the above design, at least part of the battery unit 10 is limited between the first cross beam 211 and the second cross beam 212 along the second direction X. Based on this, the first cross beam 211 and the second cross beam 212 can limit and constrain the battery unit 10 along the second direction X, thereby resisting expansion of the battery cell 11 of the battery unit 10 along the second direction X.

It can be understood that, in some possible designs, as shown in FIG. 2, FIG. 3, and FIG. 5, the first cross beam 211 is fixedly connected to the reinforcing member 30, and the second cross beam 212 is fixedly connected to the reinforcing member 30. Alternatively, in other possible designs, among the first cross beam 211 and the second cross beam 212, only the first cross beam 211 is fixedly connected to the reinforcing member 30. Alternatively, in yet some other possible designs, among the first cross beam 211 and the second cross beam 212, only the second cross beam 212 is fixedly connected to the reinforcing member 30.

It needs to be additionally noted herein that, in the design where the first cross beam 211 is fixedly connected to the reinforcing member 30 and the second cross beam 212 is fixedly connected to the reinforcing member 30, the first cross beam 211 and the second cross beam 212 can be fixedly connected to the same reinforcing member 30, or connected to different reinforcing members 30 respectively. As an example, there are a plurality of reinforcing members 30, and the plurality of reinforcing members 30 are divided into two parts, where some of the reinforcing members 30 are fixedly connected to the first cross beam 211, and other reinforcing members 30 are fixedly connected to the second cross beam 212.

The first box wall 221 is disposed at the end of the box body 21 along the first direction Z. A first box wall 221 may be disposed at one end of the box body 21 along the first direction Z, or first box walls 221 are disposed at two opposite ends of the box body 21 along the first direction Z.

The first direction Z is the direction in which the first box wall 221 is disposed on the box body 21. The second direction X is the distribution direction of the first cross beam 211 and the second cross beam 212.

The first direction Z intersects the second direction X, which means that the first direction Z and the second direction X can form an angle greater than 0° and less than 180°, that is, the first direction Z and the second direction X are not parallel. The first direction Z and the second direction X may be perpendicular to each other, or not perpendicular. The first direction Z and the second direction X may be intersecting directions on the same plane, or directions on mutually different planes, and a projection of the second direction X on the plane where the first direction Z is located can intersect the first direction ZZ. As an example, the first direction Z is parallel to the Z axis, and the second direction X is parallel to the X axis, that is, the first direction Z and the second direction X are perpendicular. The X axis, Y axis, and Z axis are the three coordinate axes of the spatial coordinate system, where the X axis is perpendicular to the Y axis, the X axis is perpendicular to the Z axis, and the Y axis is perpendicular to the Z axis.

At least one of the first cross beam 211 and the second cross beam 212 is fixedly connected to the reinforcing member 30, and the reinforcing member 30 is disposed on the first box wall 221. In this way, the reinforcing member 30 is fixedly connected to the box body 21, enhancing the constraint of the reinforcing member 30 on the first box wall 221, and effectively mitigating shaking of the first box wall 221. Further, the reinforcing member 30 can constrain at least one of the first cross beam 211 and the second cross beam 212, thereby enabling the first cross beam 211 and the second cross beam 212 to better limit and constrain the battery unit 10 in the second direction X, so as to better resist expansion of the battery cell 11 of the battery unit 10 in the second direction X.

In some embodiments, refer to FIG. 2, FIG. 3, FIG. 5, and other figures. At least one reinforcing member 30 is provided. At least some of the reinforcing members 30 have two opposite ends along the second direction X fixedly connected to the first cross beam 211 and the second cross beam 212, respectively.

It can be understood that the first cross beam 211 and the second cross beam 212 are fixedly connected to the same reinforcing member 30. Specifically, in at least some of the reinforcing members 30, one end of the reinforcing member 30 along the second direction X is fixedly connected to the first cross beam 211, and the other end of the reinforcing member 30 along the second direction X is fixedly connected to the second cross beam 212.

In this case, among at least some of the reinforcing members 30, the reinforcing member 30 can be connected to both the first cross beam 211 and the second cross beam 212, to constrain the relative positions of the first cross beam 211 and the second cross beam 212 along the second direction X. In this way, the constraint and expansion resistance of the first cross beam 211 and the second cross beam 212 to the battery unit 10 in the second direction X can be improved.

In some embodiments, refer to FIG. 2, FIG. 3, and other figures. A plurality of reinforcing members 30 are provided. At least two reinforcing members 30 are spaced apart along the third direction Y on the first box wall 221. The third direction Y intersects the first direction Z, and the third direction Y intersects the second direction X.

It should be first noted herein that the meaning of the third direction Y intersecting the first direction Z and the meaning of the third direction Y intersecting the second direction X are the same as the meaning of the first direction Z intersecting the second direction X, and specific reference can be made to the above explanation about the first direction Z intersecting the second direction X. Details are not repeated herein.

As an example, as shown in FIG. 2 and FIG. 3, at least two reinforcing members 30 are spaced apart along the third direction Y on the first box wall 221, and are substantially parallel to each other.

As an example, as shown in FIG. 2 and FIG. 3, the third direction Y is parallel to the Y axis, that is, the third direction Y is perpendicular to the second direction X, at least two reinforcing members 30 are spaced apart along the third direction Y on the first box wall 221, and are substantially parallel to each other, and the reinforcing member 30 substantially extends along the second direction X.

At least two reinforcing members 30 are spaced apart along the third direction Y. In this case, at least two reinforcing members 30 may be distributed at a plurality of positions of the first box wall 221, thereby improving the structural strength of a plurality of portions of the first box wall 221, so that shaking of the first box wall 221 can be further mitigated, reducing abnormal noise caused by shaking of the first box wall 221. Furthermore, it is convenient to respectively connect the first cross beam 211 and the second cross beam 212 to two opposite ends along the second direction X of the plurality of reinforcing members 30, thereby further improving the constraint and expansion resistance of the first cross beam 211 and the second cross beam 212 to the battery unit 10.

In some embodiments, refer to FIG. 3, FIG. 5, and other figures. The box body 21 is further provided with a first longitudinal beam 213 and a second longitudinal beam 214, and the first longitudinal beam 213 and the second longitudinal beam 214 are spaced apart along the third direction Y. At least part of the battery unit 10 is limited between the first longitudinal beam 213 and the second longitudinal beam 214 along the third direction Y. At least one of the first longitudinal beam 213 and the second longitudinal beam 214 is fixedly connected to the reinforcing member 30. The third direction Y intersects the first direction Z, and the third direction Y intersects the second direction X.

Both the first longitudinal beam 213 and the second longitudinal beam 214 refer to components used to limit the battery unit 10 along the third direction Y. The first longitudinal beam 213 may be an outer wall of the box body 21, or a wall located in the internal space of the box 20. The second longitudinal beam 214 may be an outer wall of the box body 21, or a wall located in the internal space of the box 20.

The first longitudinal beam 213 and the second longitudinal beam 214 are spaced apart along the third direction Y, so that the first cross beam 211, the second cross beam 212, the first longitudinal beam 213, and the second longitudinal beam 214 define the accommodation space 201.

As an example, as shown in FIG. 3 and FIG. 5, both the first longitudinal beam 213 and the second longitudinal beam 214 are outer walls of the box body 21.

The third direction Y refers to the distribution direction of the first longitudinal beam 213 and the second longitudinal beam 214. As an example, the first direction Z is perpendicular to the third direction Y, and the second direction X is perpendicular to the third direction Y.

At least part of the battery unit 10 is limited between the first longitudinal beam 213 and the second longitudinal beam 214 along the third direction Y, which means that at least part of the battery unit 10 is located between the first longitudinal beam 213 and the second longitudinal beam 214 (that is, located in the accommodation space 201), and is limited along the third direction Y by the first longitudinal beam 213 and the second longitudinal beam 214. One side of the battery unit 10 along the third direction Y may directly abut against the first longitudinal beam 213, and a side of the battery unit 10 along the third direction Y away from the first longitudinal beam 213 may directly abut against the second longitudinal beam 214. An intermediate component may abut against a side of the battery unit 10 away from the second longitudinal beam 214 along the third direction Y and the first longitudinal beam 213, and another intermediate component may abut against a side of the battery unit 10 away from the first longitudinal beam 213 along the third direction Y and the second longitudinal beam 214. In the above design, at least part of the battery unit 10 is limited between the first longitudinal beam 213 and the second longitudinal beam 214 along the third direction Y. Based on this, the first longitudinal beam 213 and the second longitudinal beam 214 can limit and constrain the battery unit 10 along the third direction Y, thereby resisting expansion of the battery cell 11 of the battery unit 10 along the third direction Y.

It can be understood that, in some possible designs, the first longitudinal beam 213 is fixedly connected to the reinforcing member 30, and the second longitudinal beam 214 is fixedly connected to the reinforcing member 30. Alternatively, in other possible designs, among the first longitudinal beam 213 and the second longitudinal beam 214, only the first longitudinal beam 213 is fixedly connected to the reinforcing member 30. Alternatively, in still yet other possible designs, among the first longitudinal beam 213 and the second longitudinal beam 214, only the second longitudinal beam 214 is fixedly connected to the reinforcing member 30.

It should be additionally noted herein that, in the design where the first longitudinal beam 213 is fixedly connected to the reinforcing member 30 and the second longitudinal beam 214 is fixedly connected to the reinforcing member 30, the first longitudinal beam 213 and the second longitudinal beam 214 may be fixedly connected to the same reinforcing member 30, or connected to different reinforcing members 30 respectively. As an example, a plurality of reinforcing members 30 are provided, and the plurality of reinforcing members 30 are divided into two parts, where some of the reinforcing members 30 are fixedly connected to the first longitudinal beam 213, and other reinforcing members 30 are fixedly connected to the second longitudinal beam 214.

At least one of the first longitudinal beam 213 and the second longitudinal beam 214 is fixedly connected to the reinforcing member 30, and the reinforcing member 30 is disposed on the first box wall 221. In this way, the reinforcing member 30 is fixedly connected to the box body 21, enhancing the constraint of the reinforcing member 30 on the first box wall 221, and effectively mitigating shaking of the first box wall 221. Further, the reinforcing member 30 can constrain at least one of the first longitudinal beam 213 and the second longitudinal beam 214, thereby enabling the first longitudinal beam 213 and the second longitudinal beam 214 to better limit and constrain the battery unit 10 in the third direction Y, so as to better resist expansion of the battery cell 11 of the battery unit 10 in the third direction Y.

In some embodiments, at least one reinforcing member 30 is provided. At least some of the reinforcing members 30 have two opposite ends along the third direction Y fixedly connected to the first longitudinal beam 213 and the second longitudinal beam 214, respectively.

It can be understood that the first longitudinal beam 213 and the second longitudinal beam 214 are fixedly connected to the same reinforcing member 30. Specifically, in at least some of the reinforcing members 30, one end of the reinforcing member 30 along the third direction Y is fixedly connected to the first longitudinal beam 213, and the other end of the reinforcing member 30 along the third direction Y is fixedly connected to the second longitudinal beam 214.

In this way, among at least some of the reinforcing members 30, the reinforcing member 30 may be connected to both the first longitudinal beam 213 and the second longitudinal beam 214, so as to constrain the relative positions of the first longitudinal beam 213 and the second longitudinal beam 214 along the third direction Y. In this way, the constraint and expansion resistance of the first longitudinal beam 213 and the second longitudinal beam 214 to the battery unit 10 in the third direction Y can be improved.

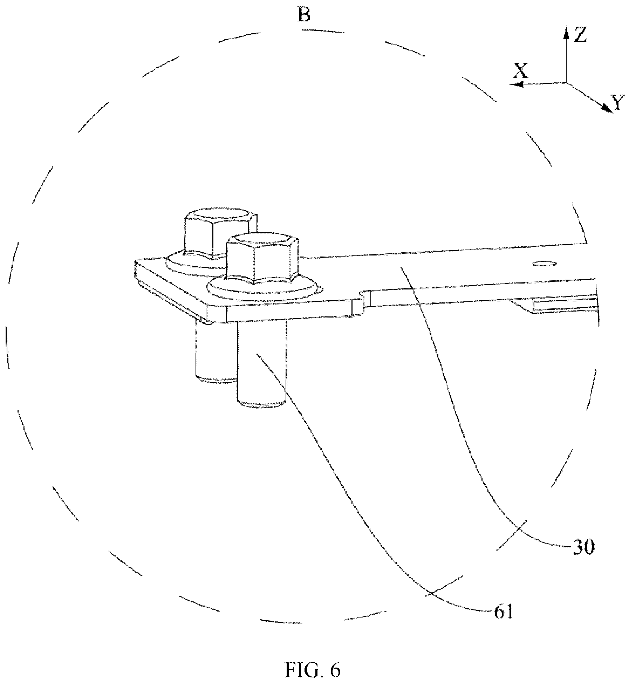

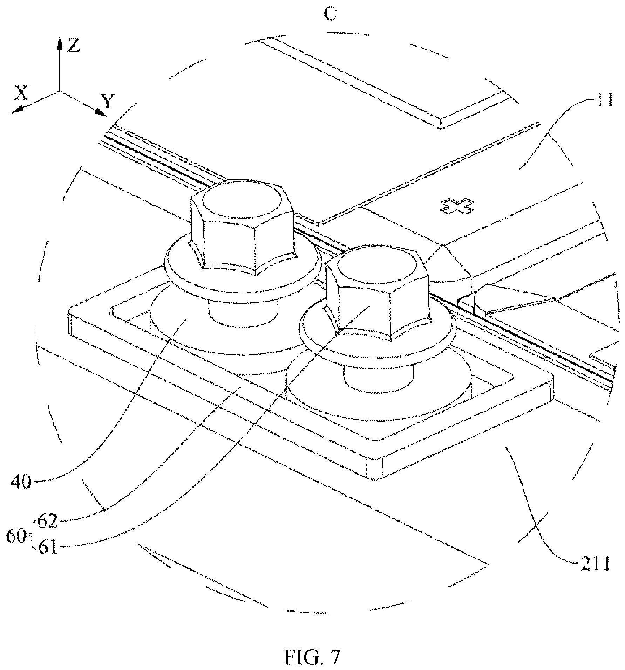

In some embodiments, refer to FIG. 2 to FIG. 7 and other figures. FIG. 6 is an enlarged view at B in FIG. 3, and FIG. 7 is an enlarged view at C in FIG. 5. The box 20 further includes a first fastening structure 60. The first fastening structure 60 includes a fastener 61, and the fastener 61 locks the reinforcing member 30, the first box wall 221, and the box body 21.

The first fastening structure 60 refers to a structure used to fasten the reinforcing member 30, the first box wall 221, and the box body 21.

A fastener 61 is a part of the first fastening structure 60, and is a component used to lock the reinforcing member 30, the first box wall 221, and the box body 21. The fastener 61 may be a component such as a bolt or a rivet.

As an example, as shown in FIG. 4, FIG. 6, and FIG. 7, the fastener 61 is a bolt, the first box wall 221 is disposed at an end of the box body 21 along the first direction Z, and the fastener 61 passes through the reinforcing member 30, the first box wall 221, and the box body 21 along the first direction Z, so that the reinforcing member 30, the first box wall 221, and the box body 21 are fastened by the fastener 61.

In the above technical solution, the reinforcing member 30, the first box wall 221, and the box body 21 are locked by the fastener 61, so that the reinforcing member 30, the first box wall 221, and the box body 21 are relatively fixed. In this way, positional fixation of the reinforcing member 30 on the first box wall 221 can be improved, and therefore the reinforcing member 30 can better improve the structural strength of the first box wall 221, so as to mitigate shaking of the first box wall 221. Further, the reinforcing member 30 is fixed relative to the box body 21, so that the reinforcing member 30 can constrain the first box wall 221, so as to mitigate shaking of the first box wall 221. In addition, when the reinforcing member 30 is locked to at least one of the first cross beam 211, the second cross beam 212, the first longitudinal beam 213, and the second longitudinal beam 214 of the box body 21 through the fastener 61, the expansion resistance of the box body 21 to the battery unit 10 can be improved.

As an example, as shown in FIG. 4, FIG. 6, and FIG. 7, the first box wall 221 is disposed at an end of the box body 21 along the first direction Z, and the reinforcing member 30 is disposed on a side of the first box wall 221 away from the battery unit 10 along the first direction Z. The fastener 61 sequentially passes through the reinforcing member 30, the first box wall 221, and the box body 21 along the first direction Z, so as to lock the reinforcing member 30, the first box wall 221, and the box body 21. In this way, the reinforcing member 30 improves the structural strength of the first box wall 221, and constrains the first box wall 221 in the direction toward the battery unit 10, thereby mitigating shaking of the first box wall 221.

In some embodiments, refer to FIG. 4 to FIG. 7 and other figures. The box body 21 is provided with a fixing member 40, and the fastener 61 locks the reinforcing member 30, the first box wall 221, and the fixing member 40.

The fixing member 40 refers to a component disposed on the box body 21 for locking the fastener 61. The fixing member 40 may be, but is not limited to, a flange.

In the above technical solution, the fastener 61 locks the reinforcing member 30, the first box wall 221, and the fixing member 40, so as to achieve fixation of the reinforcing member 30, the first box wall 221, and the box body 21. This facilitates fixing operations between the fastener 61 and the box body 21.

In some embodiments, refer to FIG. 4 to FIG. 7 and other figures. The first box wall 221 is provided with an opening 2202 for passage of the fastener 61. The first fastening structure 60 further includes a sealing member 62. The sealing member 62 is sleeved on a periphery of the fastener 61 to seal the opening 2202.

The sealing member 62 refers to a component capable of sealing, such as a rubber sealing ring or a silicone sealing ring.

The opening 2202 refers to a through hole provided on the first box wall 221. Specifically, as shown in FIG. 4 to FIG. 7, the first box wall 221 is disposed at an end of the box body 21 along the first direction Z, and the opening 2202 penetrates the first box wall 221 along the first direction Z. Based on this, the fastener 61 passes through the first box wall 221, thereby fastening the reinforcing member 30, the first box wall 221, and the box body 21.

The sealing member 62 is sleeved on the periphery of the fastener 61, so that at least part of the sealing member 62 can block the opening 2202, thereby sealing the opening 2202, and further improving the effect of sealing the internal space of the box 20.

As an example, as shown in FIG. 4, FIG. 6, and FIG. 7, the first box wall 221 is disposed at an end of the box body 21 along the first direction Z, the reinforcing member 30 is disposed on a side of the first box wall 221 away from the battery unit 10 along the first direction Z, and the fastener 61 sequentially passes through the reinforcing member 30, the first box wall 221, and the fixing member 40 on the box body 21 along the first direction Z. The sealing member 62 may be disposed between the first box wall 221 and the fixing member 40. The sealing member 62 is sleeved on the periphery of the fastener 61, and sleeved on the periphery of the fixing member 40. One end of the sealing member 62 along the first direction Z abuts against the first box wall 221, and an end of the sealing member 62 along the first direction Z away from the first box wall 221 abuts against the box body 21. The sealing member 62 may also be disposed between the first box wall 221 and the reinforcing member 30, and the sealing member 62 is sleeved on the periphery of the fastener 61. One end of the sealing member 62 along the first direction Z abuts against the first box wall 221, and an end of the sealing member 62 along the first direction Z away from the first box wall 221 abuts against the reinforcing member 30. In this way, the sealing member 62 can seal the opening 2202 of the first box wall 221 for passage of the fastener 61.

As another example, the first box wall 221 is disposed at an end of the box body 21 along the first direction Z, the reinforcing member 30 is disposed on a side of the first box wall 221 facing the battery unit 10 along the first direction Z, and the fastener 61 sequentially passes through the first box wall 221, the reinforcing member 30, and the fixing member 40 on the box body 21 along the first direction Z. The sealing member 62 is sleeved on the periphery of the fastener 61, and is disposed between the reinforcing member 30 and the first box wall 221. An end of the sealing member 62 along the first direction Z abuts against the first box wall 221, and an end of the sealing member 62 along the first direction Z away from the first box wall 221 abuts against the reinforcing member 30. In this way, the sealing member 62 can seal the opening 2202 of the first box wall 221 for passage of the fastener 61.

In the above technical solution, the sealing member 62 can seal the opening 2202 of the first box wall 221, so as to seal the internal space of the box 20.

In some embodiments, refer to FIG. 3, FIG. 4, and other figures. The first box wall 221 is provided with a groove 2201, and at least part of the reinforcing member 30 is limited in the groove 2201.

As an example, as shown in FIG. 3 and FIG. 4, the first box wall 221 is disposed at an end of the box body 21 along the first direction Z, a side of the first box wall 221 away from the battery unit 10 along the first direction Z is provided with the groove 2201, and at least part of the reinforcing member 30 is limited in the groove 2201. As another example, the first box wall 221 is disposed at an end of the box body 21 along the first direction Z, a side of the first box wall 221 facing the battery unit 10 along the first direction Z is provided with the groove 2201, and at least part of the reinforcing member 30 is limited in the groove 2201.

As an example, as shown in FIG. 3 and FIG. 4, the reinforcing member 30 extends along the second direction X, and at least part of the reinforcing member 30 is limited in the groove 2201 along the third direction Y.

In the above technical solution, at least part of the reinforcing member 30 may be limited in the groove 2201 of the first box wall 221. In this way, the reinforcing member 30 can improve the structural strength of the first box wall 221, and the reinforcing member 30 can improve the expansion resistance of the first cross beam 211 and the second cross beam 212 to the battery unit 10.

In some embodiments, refer to FIG. 4 and other figures. The battery 100 further includes a second fastening structure 50, and the second fastening structure 50 fastens the reinforcing member 30 to the first box wall 221.

In other embodiments, the battery 100 further includes a third fastening structure, and the third fastening structure fastens the battery unit 10 to the first box wall 221.

In still other embodiments, the battery 100 further includes a second fastening structure 50 and a third fastening structure, the second fastening structure 50 fastens the reinforcing member 30 to the first box wall 221, and the third fastening structure fastens the battery unit 10 to the first box wall 221.

The second fastening structure 50 refers to a structure used to fasten the reinforcing member 30 to the first box wall 221.

The third fastening structure refers to a structure used to fasten the battery unit 10 to the first box wall 221.

The first box wall 221 and the reinforcing member 30 are fastened by the second fastening structure 50, and therefore the reinforcing member 30 can be firmly fixed to the first box wall 221, to better improve the structural strength of the first box wall 221.

The first box wall 221 and the battery unit 10 are fastened by the third fastening structure, so that the first box wall 221 can be fixed relative to the battery unit 10. The fixing relationship between the battery unit 10 and the first box wall 221 can constrain the first box wall 221, thereby mitigating shaking of the first box wall 221.

In some embodiments, the second fastening structure 50 includes a first adhesive layer. The first adhesive layer is disposed between the reinforcing member 30 and the first box wall 221, and adheres to the reinforcing member 30 and the first box wall 221.

The first adhesive layer may be, but is not limited to, an adhesive layer formed through solidification of a structural adhesive.

Specifically, the first adhesive layer is accommodated in the space between the reinforcing member 30 and the first box wall 221, and adheres to the first box wall 221 and the reinforcing member 30, thereby achieving fixation between the reinforcing member 30 and the first box wall 221.

In some embodiments, the third fastening structure includes a second adhesive layer. The second adhesive layer is disposed between the first box wall 221 and the battery unit 10, and adheres to the first box wall 221 and the reinforcing member 30.

Specifically, the second adhesive layer is accommodated in a space between the first box wall 221 and the battery unit 10, and adheres to the first box wall 221 and the battery unit 10, thereby achieving fixation between the first box wall 221 and the battery unit 10.

As an example, as shown in FIG. 4, the first box wall 221 is disposed at an end of the box body 21 along the first direction Z, the reinforcing member 30 is disposed on the side of the first box wall 221 away from the battery unit 10 along the first direction Z. At least part of the first adhesive layer is accommodated in a space between the reinforcing member 30 and the first box wall 221 along the first direction Z, and at least part of the second adhesive layer is accommodated in the space between the first box wall 221 and the battery unit 10 along the first direction Z.

The second fastening structure 50 is set to include the first adhesive layer. In this case, the operation of using the second fastening structure 50 to fasten the first box wall 221 to the reinforcing member 30 is easy.

The third fastening structure is set to include the second adhesive layer. In this case, the operation of using the third fastening structure to fasten the battery unit 10 to the first box wall 221 is easy.

In some embodiments, the reinforcing member 30 is a steel strip, an iron strip, an aluminum strip, an aluminum alloy strip, or a polymer material strip.

It can be understood that a material of the reinforcing member 30 may include steel, iron, aluminum, aluminum alloy, or polymer material.

When the reinforcing member 30 includes a polymer material strip, the material of the reinforcing member 30 may be, but is not limited to, continuous fiber reinforced thermoplastic composites (Continuous Fiber Reinforced Thermoplastic composites, CFRTP).

In the above technical solution, the reinforcing member 30 has relatively high structural strength, thereby effectively improving the structural strength of the first box wall 221 and constraining the first box wall 221, and mitigating shaking of the first box wall 221.

It should be further noted herein that the reinforcing member 30 is a steel strip, and the steel strip has relatively high structural strength and low mass. In this way, the shaking of the first box wall 221 can be greatly mitigated. Since the mass is relatively low, impact on an energy density of the battery 100 can be minimized.

Refer to FIG. 1. The electric apparatus provided in the embodiments of this application includes a battery 100. The battery 100 in this embodiment is the same as the battery 100 in the foregoing embodiments. For details, refer to the descriptions of the battery 100 in the foregoing embodiments. The details are not repeated herein.

For the electric apparatus provided in the embodiments of this application, abnormal noise in the battery 100 can be reduced by adopting the battery 100 described above.

As an embodiment of this application, as shown in FIG. 2 to FIG. 7, the battery 100 includes the battery unit 10, the box 20, and the reinforcing member 30. The battery unit 10 is accommodated in the internal space of the box 20, and the battery unit 10 includes a plurality of battery cells 11. The box 20 includes the box body 21 and the cover 22. The cover 22 is disposed at an end of the box body 21 along the first direction Z, and the first box wall 221 and the box body 21 define the internal space of the box 20. The box 20 further includes the first box wall 221. The first box wall 221 is provided on the cover 22. The first cross beam 211 and the second cross beam 212 spaced apart along the second direction X are provided in the box body 21. At least part of the battery unit 10 is limited between the first cross beam 211 and the second cross beam 212 along the second direction X. The reinforcing member 30 is a steel strip. The side of the first box wall 221 away from the battery unit 10 along the first direction Z is provided with the groove 2201. At least part of the reinforcing member 30 is limited in the groove 2201 along the third direction Y. The reinforcing member 30 is provided in plurality, and the plurality of reinforcing members 30 are spaced apart along the third direction Y. An end of each reinforcing member 30 along the second direction X is fixedly connected to the first box wall 221 and the first cross beam 211, and an end of each reinforcing member 30 along the second direction X away from the first cross beam 211 is fixedly connected to the first box wall 221 and the second cross beam 212.

The above embodiments are merely optional embodiments of this application and are not intended to limit this application. For those skilled in the art, modifications and variations can be made to this application. Any modifications, equivalent replacements, improvements, and the like made within the spirit and principles of this application should be included within the scope of the claims of this application.

## Claims

1. A battery (100), comprising:
a battery unit (10);
a box (20), comprising a box body (21) and a first box wall (221) covering an end of the box body (21), wherein the battery unit (10) is accommodated in a space enclosed by the box body (21) and the first box wall (221); and
a reinforcing member (30), at least partially disposed on the first box wall (221) and fixedly connected to the box body (21).

2. The battery (100) according to claim 1, wherein the reinforcing member (30) is provided in plurality, at least two reinforcing members (30) are disposed on the first box wall (221) at intervals, and/or at least two reinforcing members (30) are disposed on the first box wall (221) in a staggered manner.

3. The battery (100) according to claim 1 or 2, wherein the reinforcing member (30) is disposed on a side of the first box wall (221) away from the battery unit (10).

4. The battery (100) according to any one of claims 1 to 3, wherein the first box wall (221) is disposed at an end of the box body (21) along a first direction (Z); the box body (21) is provided with a first cross beam (211) and a second cross beam (212) spaced apart along a second direction (X); at least part of the battery unit (10) is limited between the first cross beam (211) and the second cross beam (212) along the second direction (X); at least one of the first cross beam (211) and the second cross beam (212) is fixedly connected to the reinforcing member (30); and the first direction (Z) intersects the second direction (X).

5. The battery (100) according to claim 4, wherein at least some of the reinforcing members (30) have two opposite ends along the second direction (X) fixedly connected to the first cross beam (211) and the second cross beam (212), respectively.

6. The battery (100) according to claim 4 or 5, wherein the reinforcing member (30) is provided in plurality; at least two reinforcing members (30) are disposed on the first box wall (221) at intervals along a third direction (Y); and the third direction (Y) intersects both the first direction (Z) and the second direction (X).

7. The battery (100) according to any one of claims 4 to 6, wherein the box body (21) is further provided with a first longitudinal beam (213) and a second longitudinal beam (214) spaced apart along the third direction (Y); at least part of the battery unit (10) is limited between the first longitudinal beam (213) and the second longitudinal beam (214) along the third direction (Y); at least one of the first longitudinal beam (213) and the second longitudinal beam (214) is fixedly connected to the reinforcing member (30); and the third direction (Y) intersects both the first direction (Z) and the second direction (X).

8. The battery (100) according to claim 7, wherein at least some of the reinforcing members (30) have two opposite ends along the third direction (Y) fixedly connected to the first longitudinal beam (213) and the second longitudinal beam (214), respectively.

9. The battery (100) according to any one of claims 1 to 8, wherein the box (20) further comprises a first fastening structure (60), the first fastening structure (60) comprises a fastener (61), and the fastener (61) locks the reinforcing member (30), the first box wall (221), and the box body (21).

10. The battery (100) according to claim 9, wherein the box body (21) is provided with a fixing member (40), and the fastener (61) locks the reinforcing member (30), the first box wall (221), and the fixing member (40).

11. The battery (100) according to claim 9 or 10, wherein the first box wall (221) is provided with an opening (2202) for passage of the fastener (61); the first fastening structure (60) further comprises a sealing member (62); and the sealing member (62) is sleeved on a periphery of the fastener (61) to seal the opening (2202).

12. The battery (100) according to any one of claims 1 to 11, wherein the first box wall (221) is provided with a groove (2201), and at least part of the reinforcing member (30) is limited in the groove (2201).

13. The battery (100) according to any one of claims 1 to 12, wherein the battery (100) further comprises a second fastening structure (50), wherein the second fastening structure (50) fastens the reinforcing member (30) to the first box wall (221);
and/or the battery (100) further comprises a third fastening structure, wherein the third fastening structure fastens the battery unit (10) to the first box wall (221).

14. The battery (100) according to claim 13, wherein the second fastening structure (50) comprises a first adhesive layer, and the first adhesive layer is disposed between the reinforcing member (30) and the first box wall (221) and adheres to the reinforcing member (30) and the first box wall (221);
and/or the third fastening structure comprises a second adhesive layer, and the second adhesive layer is disposed between the first box wall (221) and the battery unit (10) and adheres to the first box wall (221) and the reinforcing member (30).

15. The battery (100) according to any one of claims 1 to 14, wherein the reinforcing member (30) is a steel strip, an iron strip, an aluminum strip, an aluminum alloy strip, or a polymer material strip.

16. An electric apparatus, comprising the battery (100) according to any one of claims 1 to 15.
